# EUROPEAN PATENT APPLICATION

(11) **EP 0 580 298 A2**
(43) Date of publication of application: **26.01.1994**
(21) Application number: 93305058.5
(22) Date of filing: 28.06.1993
(51) Int. Cl.: G01M 3/28, G01F 15/00

(54) **Flow detecting systems**

(30) Priority: 30.06.1992 GB 9213892
(71) Applicant: Wheaton, Roger Bowden, South Chard, Somerset TA20 4QW (GB)
(72) Inventor: Wheaton, Roger Bowden, South Chard, Somerset TA20 4QW (GB)
(74) Representative: Brown, Michael Stanley

(57) **Abstract**

A flow detecting system for, for example, a water supply pipe (10), includes a flow detector (11) and a control circuit (13) which receives signals from the flow detector (11). The control circuit (13) generates an output in the event that the sensed flow rate fails to fall below a predetermined level during a given time period. Such failure of the flow rate to fall below the predetermined level is an indication that there is a leak in the supply pipe (10) downstream of the flow detector (11) and a control valve (15) is closed on generation of an output by the control circuit (13).

## Description

### Field of the Invention

This invention relates to flow detecting systems and is primarily concerned with the detecting of leaks in water supply pipes.

Now that the supply of water to the majority of users is metered, there is a financial incentive in avoiding the waste of water which can arise as a result of a leak. Leaks can, however, remain unaffected for quite some time, particularly in a rural location where the water meter may be sited at a position remote from the user, and it is not unknown for a farmer to be faced with a water supply bill which is many hundreds of pounds more than usual as a result of a leakage.

It is accordingly an object of the present invention to provide an improved flow detection system. A more specific object of the invention is to provide a method for the detection of leaks in water supply pipes which will limit the amount of water which can be wasted and hence will have cost-saving advantages.

Although the primary application of the invention is in relation to the detection of leaks in water supply pipes, it is envisaged that the invention will have other applications, for example, the detection of leaks in gas supply pipes.

### Summary of the Invention

According to a first aspect of the present invention there is provided a flow detecting system which includes a flow detector and a control circuit which receives signals from the flow detector in dependence on the sensed flow rate and generates an output when the sensed flow rate fails to fall below a predetermined level during a predetermined time period

The output may be applied to a control valve which is operated to interrupt the fluid flow. Alternatively, the output may be applied to an alarm.

Substantially all domestic and many industrial and agricultural water users consume water irregularly and spasmodically, i.e. there is no continuous flow of water over an extended period, except when there is a leak. The absence of an indication that the sensed flow rate has fallen below the predetermined level during the given time period thus provides an indication that there is a leak downstream of the flow detector.

According to a second aspect of the present invention there is provided a method for the detection of a leak in a fluid supply pipe, said method comprising:-
a) providing a flow detector for measuring the rate of flow of fluid through the pipe and a control circuit which receives signals from the flow detector,
b) storing said signals,
c) ascertaining, after a given time period, whether there are any signals which indicate that, at any time in that period, the flow of fluid fell below a predetermined level, and
d) generating an output to indicate the presence of a leak in the event that there are no such stored signals.

The control circuit may include a programmable processor which can be set to operate a valve and/or an alarm when the rate of flow does not fall below the set value in the given time period.

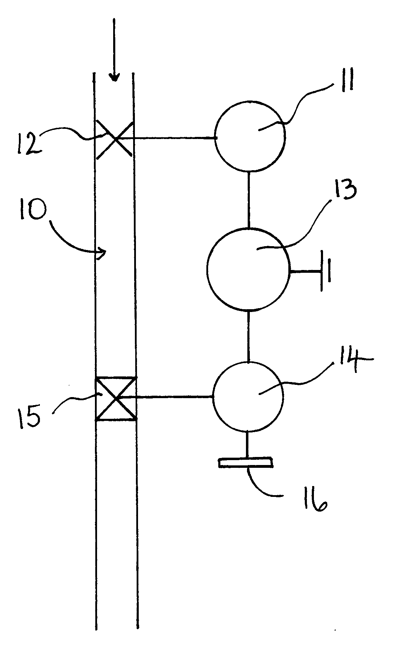

### Brief Description of the Drawing

The single figure of the accompanying drawing is a diagrammatic representation of a system for detecting leaks in water supply pipes.

### Description of the Preferred Embodiment

As shown in the drawing, water is supplied to a user, for example, a domestic consumer, through a supply pipe 10. A flow detector 11 has a sensor element 12 responsive to the rate of flow of water through the supply pipe 10 and the flow detector 11 is arranged to transmit a signal dependent on the rate of flow of water through the supply pipe. The sensor element 12 can be a vaned rotor which, using a conventional magnet system, generates an output which is dependent on the rate of flow of water through the pipe 10.

The output from the flow detector 11 is applied to a processor 13 which is programmed to interpret the signals which it receives from the flow detector 11 and, in particular, to ascertain whether the sensed flow rate falls below a predetermined value during a given time period. The processor 13 is battery-powered so that the system is operable without the requirement for any mains power supply.

Two 3-volt lithium batteries may supply the power supply and these will typically have a working life of ten years so that maintenance and service of the system is minimised.

The processor 13 generates an output when the sensed flow rate fails to fall below the predetermined value during the given time period. This output is applied to a solenoid 14 to close a valve 15 to terminate the flow of water through the pipe 10. The solenoid-operated valve 15 may include a latch system such that, once the valve 15 has been moved into its closed position, it will remain in this closed position without further energisation.

During normal conditions, the rate at which water passes along the pipe 10 will, at some time or another, be zero or substantially zero unless there is a leak in the system supplied by the pipe 10. If, therefore, the sensed flow rate fails to fall below the predetermined value during the specified time period, this is an indication that there is a leak in the system and hence the valve 15 will be closed.

As an alternative to closing the valve 15, or in addition to closing the valve 15, the processor 13 may transmit an output to an alarm (not shown) to provide an indication to the user that he has a leak.

The processor 13 comprises a printed circuit board on which a programmable chip is mounted and the software used for programming purposes is such that the processor 13 can be set for different time periods. For example, the processor 13 might be set for domestic users to close the valve 15 if the sensed flow does not fall below the predetermined value during a period of one or two hours whereas, for agricultural, commercial or industrial users, the set time period might be six or eight hours.

The power for operation of the solenoid 14 to actuate the valve 15 is obtained from the batteries which provide the power for the processor 13 but, as the solenoid 14 will only be energised infrequently and then only for a short period of time, this will not cause draining of the batteries.

Once the valve 15 has been closed, this will, in itself, provide an indication to the user that there is a leak in his water supply line downstream of the flow detector 11. When the leak has been repaired, or even while it is being repaired, the valve 15 can be opened by pressing a reset button 16 which serves to energise the solenoid 14 in the reverse direction to open the valve 15.

With the current programme for the metering of water supplies and the installation of boundary boxes containing meters, the system may be in the form of a self-contained unit which is installed in the boundary box adjacent the water meter.

The processor 13 may be programmed in such manner that, at periodic intervals, for example, once per month, the valve 15 is closed and then reopened. This arrangement ensures that the likelihood of sticking or other failure of the valve 15 is reduced.

Although the invention has been developed in relation to the detection of leaks in water supply pipes, it is envisaged that the system will also be applicable to other fluid flow lines, for example, oil and gas supply lines.

## Claims

1. A flow detecting system which includes a flow detector (11) and a control circuit (13) which receives signals from the flow detector (11) in dependence on the sensed flow rate and generates an output when the sensed flow rate fails to fall below a predetermined level during a predetermined time period.

2. A flow detecting system as claimed in Claim 1, in which the output is applied to a control valve (15) which is operated to interrupt the fluid flow.

3. A flow detecting system as claimed in Claim 1, in which the control circuit (13) comprises a processor which is connected to the flow detector and is programmed so that it records instances when the detected flow rate falls below said predetermined level and generates an output when no such instances have been recorded in the given time period.

4. A flow detecting system as claimed in Claim 3, in which the processor (13) is programmable so that the given time period is a selectable whole number of hours.

5. A flow detecting system as claimed in Claim 2, in which the control valve (15) is a solenoid-operated valve which is normally open but which is closed on receipt of a signal from the control circuit (13).

6. A flow detecting system as claimed in Claim 1, in which the flow detector (11) comprises a vaned rotor which is arranged for rotation at a rate dependent on the rate of fluid flow.

7. A flow detecting system as claimed in Claim 5, in which the solenoid-operated valve (15) is latched so that, once moved into its closed position, it will then remain in its closed position, a manually operable reset mechanism (16) being provided for returning the valve (15) to its open position.

8. A method for the detection of a leak in a fluid supply pipe (10), said method comprising:-
a) providing a flow detector (11) for measuring the rate of flow of fluid through the pipe (10) and a control circuit (13) which receives signals from the flow detector (11),
b) storing said signals,
c) ascertaining, after a given time period, whether there are any signals which indicate that, at any time in that period, the flow of fluid fell below a predetermined level, and
d) generating an output to indicate the presence of a leak in the event that there are no such stored signals.

9. A method as claimed in Claim 8, in which the control circuit (13) includes a programmable processor which can be set to operate a valve and/or an alarm when the rate of flow does not fall below the set value in the given time period.

10. A method as claimed in Claim 8, as applied to the detection of a leak in a water supply pipe, in which the flow detector (11) is located adjacent a water meter and in which the flow detector (11) and flow meter are contained within a box.
